# EUROPEAN PATENT APPLICATION

(11) **EP 4 012 070 A1**
(43) Date of publication of application: **15.06.2022**
(21) Application number: 21210385.7
(22) Date of filing: 25.11.2021
(51) Int. Cl.: C25B 1/04, C25B 9/00, C25B 15/00, F28F 3/00

(54) **HEAT EXCHANGER**

(30) Priority: 30.11.2020 DK PA202070802; 15.01.2021 DK PA202170022
(71) Applicant: Danfoss A/S, 6430 Nordborg (DK)
(72) Inventor: Nielsen, Helge, 6430 Nordborg (DK)
(74) Representative: Inspicos P/S

(57) **Abstract**

The present invention relates to a heat exchanger (10) adapted to be connected to an electrolyzing device (2) such that fluids circuited in the electrolyzing device (2) also circuits in the heat exchanger (10).

The heat exchanger is adapted for a heat exchanging fluid simultaneously to cool two fluids.

The present invention further relates to an electrolyzer (1) equipped with a heat exchanger (1).

## Description

### BACKGROUND

Power-to-X relates to electricity conversion, energy storage, and reconversion pathways that use surplus electric power, typically during periods where fluctuating renewable energy generation exceeds load.

Electrolyzers are devices that use electricity to drive an electrochemical reaction to break e.g. water into hydrogen and oxygen. The construction of an electrolyzer is very similar to a battery or fuel cell; it consists of an anode, a cathode, and an electrolyte.

The hydrogen produced from an electrolyzer is perfect for use with hydrogen fuel cells. The reactions that take place in an electrolyzer are very similar to the reaction in fuel cells, except the reactions that occur in the anode and cathode are reversed. In a fuel cell, the anode is where hydrogen gas is consumed, and in an electrolyzer, the hydrogen gas is produced at the cathode. A very sustainable system can be formed when the electrical energy needed for the electrolysis reaction comes from renewal energy sources, such as wind or solar energy systems.

Direct current electrolysis (efficiency 80-85% at best) can be used to produce hydrogen which can, in turn, be converted to e.g. methane (CH4) via methanation, or converting the hydrogen, along with CO2 to methanol, or in by other substances.

The energy, such as hydrogen, generated in this manner e.g. by windmills then can be stored for later usage.

Electrolyzers can be configured in a variety of different ways and is generally divided into two main designs: unipolar and bipolar. The unipolar design typically uses liquid electrolyte (alkaline liquids), and the bipolar design uses a solid polymer electrolyte (proton exchange membranes).

Alkaline water electrolysis has two electrodes operating in a liquid alkaline electrolyte solution of potassium hydroxide (KOH) or sodium hydroxide (NaOH). These electrodes are separated by a diaphragm, separating the product gases and transporting the hydroxide ions (OH-) from one electrode to the other.

Other fuels and fuel cells include phosphoric acid fuel cells, molten carbonate fuel cells, solid oxide fuel cells and all their subcategories as well. Such fuel cell is adaptable for use as an electrolyzer as well.

It is an advantage if the fluid solutions operating in the plant are within given temperatures to optimize the efficiency. It is also an advantage if the plant could compact and scalable.

### SUMMARY OF THE INVENTION

The solution is as indicated in claim 1.

This includes introducing a heat exchanger adapted to be connected to an electrolyzing device such that fluids circuited in the electrolyzing device also circuits in the heat exchanger.

The heat exchanger may be connected to the electrolyzing device such that the fluids pass the heat exchanger before being circuited to the electrolyzing device. This enables a controlled temperature of the fluids before circuiting them to the processing in the electrolyzing device.

The heat exchanger may be of the kind formed as a stack of patterned heat transferring plates positioned on top of each other, where the heat transfer plates are shaped with patterns such that when two plates are stacked on top of each other, the patterns define a flow circuit between the two plates. This enables an easy scaling of the heat exchanger according to requirements, such as by changing the number of heat transfer plates.

Further, the electrolyzing device will have some profile, such as circular, oval, oblate, pentagonal like squared etc., the present solution would make it easy forming the heat transfer plates accordingly to match the profile of the electrolyzing device.

The heat transfer plates may be connected in pairs such that the two plates in a pair is sealed ell along their rims and contacts each other by the intersecting patterns of the heat transfer plates forming fluidly connected inner cavities for providing at least one flow circuit.

First or second pair of openings may be formed in the heat transfer plates and where two adjacent plates of two connected pairs may be connected and sealed together by e.g. a welding or brazing along the edge of the plate first or second set of openings.

The transfer plates may be formed with a first and second set of openings and defines a first (13) and second (14) flow circuit for respective a first and second fluid.

In an embodiment a separation is formed to seal the first flow circuit from the second flow circuit, where the separation may be formed in the inner cavity of a pair of connected heat transfer plates defining the respective first flow circuit and second fluid flow circuit. The separation may be formed by a projection in the plates in the inwards direction relative to the inner cavity, such that when the meet inside the cavity the forms a blockage between the first and second flow circuits.

A stack (12) of heat transfer plates according to previous embodiments may be positioned in a shell, and where a third flow circuit is formed in the inner cavity of the shell. where the third flow circuit (15) is formed at the outside surfaces of the plates (11) of the connected pairs of plates.

The third fluid circuit may be adapted for a heat transferring fluid to transfer heat with both the first and second fluids in the respective first and second flow circuits. This e.g. is the case in the embodiments where the first and second circuits flows e.g. in the inner cavity of connected pairs of heat transfer plates, and the third circuit with the heat transferring fluid flows between the pairs, then it exchanges heat with the fluids in both the first and second circuits.

The heat exchanger may comprise a flange defining flange holes adapted for rods to fix the heat exchanger to the electrolyzing device.

In an embodiment a cover plate is positioned as a separation between the stack and the electrolysing device, where the cover plate is formed with cover plate opening adapted to connect the first and second flow circuits to the plant.

The present invention further relates to an eelectrolyzer comprising an electrolysing device equipped with the heat exchanger according to any of the previous claims.

### FIGURES

- Fig. 1: Illustration of an electrolyzer equipped with a heat exchanger at its one end.
- Fig. 2: Illustration of heat exchanger according to an embodiment of the present invention.
- Fig. 3: Illustration of some of the parts of a heat exchanger according to an embodiment of the present invention.
- Fig. 4: Illustration of an embodiment where a heat exchanger is connected at both ends of an electrolyzer.

### DETAILED DESCRIPTION OF THE INVENTION

It should be understood that the detailed description and specific examples, while indicating embodiments of the invention, are given by way of illustration only.

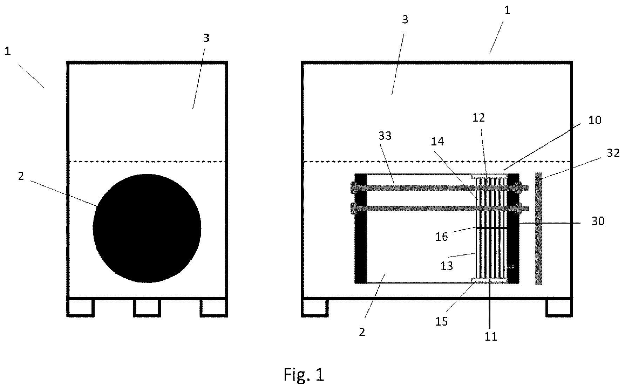

The principle of the present invention is illustrated in fig. 1 showing a plant (1), such as an electrolyzer or fuel cell, equipped with a heat exchanger (10). In general, the following example of embodiment the plant (1) is referred to as an electrolyzer (1), such as an alkaline electrolyzer for producing hydrogen, but the term 'electrolyzer' (1) refers in common to electrolyzers for producing fuels, or fuel cells using such fuels.

The embodiment shows an electrolyzer (1) comprising an electrolyzing device (2) formed of an assembly of diaphragms etc. Regulating elements (3) may be connected with the electronics etc., such as to form the control and regulation of operation of the electrolyzer (1).

The figure 1 at the left shows the electrolyzer (1) seen from the front, where the electrolyzing device (2) appears circular, though it naturally could have other shapes, such as oblate, oval, squared, polygonal etc.

A heat exchanger may be connected to provide the desired operating temperature, where such heat exchanger traditionally is positioned under a membrane stack of the fuel cell and are typically a shell and tube heat exchanger.

The right-hand figure 1 shows an embodiment of the present invention, where the electrolyzer (1) is seen from the side and illustrating a heat exchanger (10) connected at its one end. The fluid solutions circulating in the electrolyzing device (2) passes the heat exchanger (10) to regulate their temperatures.

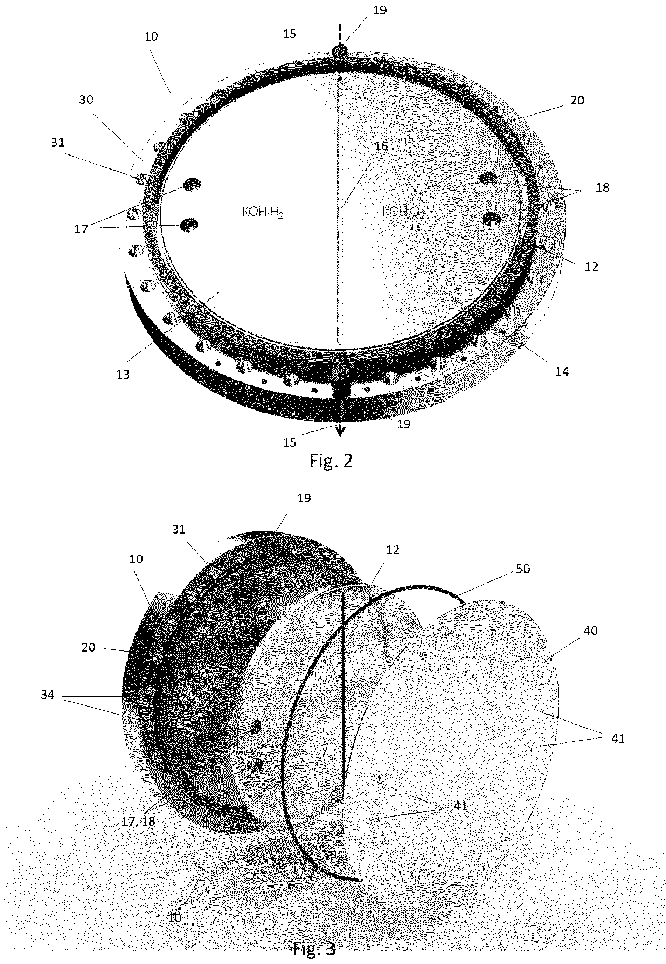

Fig. 2 illustrates an embodiment heat exchanger (10) according to the present invention adapted to be connected to an electrolyzer (1). The heat exchanger (10) is formed of a stack (12) of patterned heat transferring plates (11) positioned on top of each other. Such a heat exchanger is easily scalable by changing the number of plates (11).

The heat transfer plates (11) are shaped with patterns such that when two plates (11) are stacked on top of each other, the patterns define a flow circuits (13, 14, 15) between the two plates.

In the illustrated embodiment the heat exchanger is a plate-and-shell heat exchanger (10). The heat exchanger (10) comprises a shell (20) and a plurality of sealed pairs of patterned heat transfer plates (11) within the shell (20).

The shell (20) may be of a hollow cylindrical shape and the plates (11) may be of a corresponding shape and size such that they can be fit into the shell (20). Other shapes of the shell (20) and plates (11) are also possible; however, shapes are preferred, which allow for a substantially close positioning of the plates (11) within the shell (20).

The shell (20) with advantage has the same shape as the electrolyzing device (2), such that it fits and matches its one end.

The plates (11) in the pairs contacts each other by intersecting patterns forming fluidly connected cavities for providing a fluid flow paths, or circuits (13, 14) for a first or second fluid. The first or second fluid flow enters and leaves the heat exchanger through first (17) and/or second pairs (18) of openings, each defining an inlet and outlet opening for the respective fluid.

The plates (11) in the pairs may be connected e.g. by welding or brazing at their rims, possible also at the connected intersecting patterns. Two and two this forms cavities for a sealed first or second fluid flow circuit (13, 14) from a first or second inlet opening (17, 18) to a first or second outlet opening (17, 18).

The first (17) or second (18) pair of openings may be formed in the heat transfer plates (11) and is connecting fluidly adjacent plates (10) to each other. The two adjacent plates (11) of two connected pairs may be connected and sealed together by e.g. a welding or brazing along the edge of the plate first or second set of openings (17, 18).

A third flow circuit (15) is formed at the outside surfaces of the plates (11) by the connected patterns projecting outwardly relative to the inner cavities of the connected pairs of plates (11), thus at the opposite side of the plates (10). The third flow circuit (15) thus is formed outside of the sealed pairs of plates (11) and inside of the shell (20) and is connected to a second pair of openings (19) defining a third inlet and outlet. A third fluid flow enters and leaves the heat exchanger (10) through third inlet and outlet openings (19).

The shell (20) forms a second cavity in which the plates (11) are arranged and in which a third flow circuit (15) for a third fluid flow is provided. The third fluid flow enters and leaves the heat exchanger (10) through third inlet and outlet openings (19).

The first or second flow circuit (13, 14) and third fluid flow circuit (15) are separated and sealed from each other respectively by the plate pairs connected at the rims and the pairs being connected by being connected at their rim of the first or second openings (17, 18). The heat exchange occurs between the two fluids flowing separated from each other by the plates (11).

Fluid for the first or second flow circuit (13, 14) is sealed from the inside of the second cavity inside the shell (20), and therefore the third flow circuit (15), but each inner cavity of a pair is fluidically contacted with the other cavities of the pairs of plates (10) in the stack connected at the rims of their first or second openings (17, 18).

Fluid for the third flow circuit (15) is in fluid contact to the second cavity inside the shell (20) by the third openings (19). The third circuit (15) passes over the outer rims and outer surfaces of the plates (11) in the pairs relative to their inner cavities from which it is sealed.

Figs. 2 shows the heat exchanger (10) comprising a flange (30) defining flange holes (31). Referring to fig. 1, rods (33) are seen fixing the heat exchanger (10) to the electrolyzing device (2). The rods (33) may be threaded such that nuts can be winded onto the exposed ends to tighten the fixation. In one embodiment such flange holes (31) extend at the full circumference of the flange (30) to make a uniform fixation of rods (33). Fig. 1 further shows an additional flange (32) to form an externally connected solution.

Returning to fig. 2 the heat transfer plates (11) is seen having both the first (17) and second (18) sets of openings and defining both the first (13) and second (14) flow circuit. A separation (16) then may be formed sealing the first flow circuit (13) from the second flow circuit (14). The separation (16) may be formed in the inner cavity of a pair of connected heat transfer plates (11) defining the respective first flow circuit (17) and second fluid flow circuit (18). In the illustrated embodiment the separation (16) is formed by a projection in the plates (11) in the inwards direction relative to the inner cavity, such that when the projections of the two pair plates (11) meet inside the cavity, they forms a blockage between the first (13) and second flow circuits (14). In addition, or alternatively, a sealing element may be inserted.

Two independent and sealed flow circuits (13, 14) thus are formed within each inner cavity of the pairs of connected plates (11), one for anode side fluid flow, the first fluid, and one for the cathode side fluid flow, the second fluid.

The third fluid flowing in the third circuit (15) then could the heat transferring fluid, e.g. a cooling or heating fluid, and as it flows at the full width of the plates (11) it exchange heat with the fluid in both the first (13) and second (14) flow circuits, either for cooling or heating.

Fig. 3 is a view if some of the parts of the heat exchanger (10), showing the stack (12) of heat transfer plates (11) and the shell (20). In this embodiment the flange (30) is formed as a plate defining the outer side of the heat exchanger (10) relative to the electrolyzer (1) and is formed with flange openings (34) adapted to connect the first (17) and second (18) opening pairs to external fluid circuits.

A cover plate (40) may be positioned as a separation between the stack (12) and the plant (1), where the cover plate (40) may be formed with cover plate openings (41) adapted to connect the first (13) and second (14) flow circuits to the plant (1).

Sealing elements (50) may be included to seal the parts like cover plate (40) and flange (30).

The heat transfer plates (11) may be formed of flat sheets pressed with the patterns and optionally the separation (16) projections. Once shaped with the patterns, the plates (11) still define a flat sheet extending in a two-dimensional plane, with the patterns projecting at the opposing sides relative to the plane. The patterns may be projections, corrugations etc.

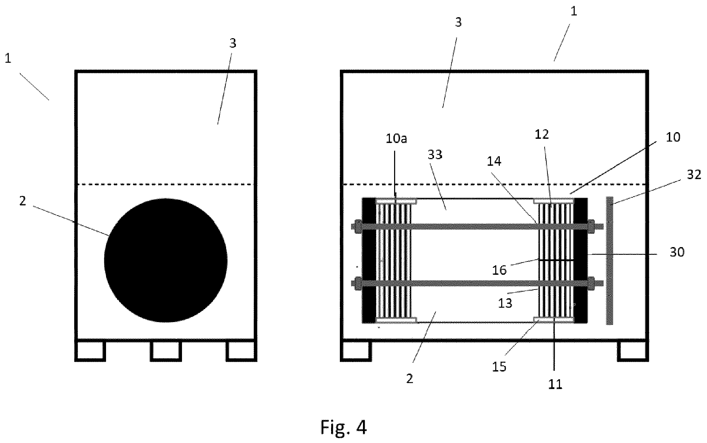

Fig. 4 illustrates an embodiment where a second heat exchanger (10a) is connected at the opposite end of the electrolyzing device (2) relative to the heat exchanger (10). In this embodiment each of the heat exchangers (10, 10a) may be adapted for heating or colling each their fluid of the first fluid and the second fluid respectively. The heat exchangers (10, 10a) may thus each be formed with one set of openings (17, 18).

In another embodiment the two heat exchangers (10, 10a) each may be formed according to the embodiment of figs. 2 and 3, or at least each being adapted for three fluids, and where the one of the heat exchangers (10) is adapted for heating and the other of the heat exchangers (10a) being adapted for cooling the first and second fluids.

### List of references:

- 1 -: Electrolyzer
- 2 -: Electrolyzing device
- 3 -: Regulating elements
- 10 -: heat exchanger
- 10a -: second heat exchanger
- 11-: Patterned heat transferring plates
- 12 -: Stack of heat transfer plates
- 13 -: First circuit
- 14 -: Second circuit
- 15 -: Third circuit
- 16 -: Separation
- 17-: First set of openings
- 18 -: Second set of openings
- 19 -: Third set of openings
- 20 -: Shell
- 30 -: Flange
- 31 -: Flange holes
- 32 -: Additional Flange
- 33-: Rod
- 34 -: Flange plate openings
- 40 -: Cover plate
- 41 -: Cover plate openings
- 50 -: Sealing elements

## Claims

1. Heat exchanger (10) adapted to be connected to an electrolyzing device (2) such that fluids circuited in the electrolyzing device (2) also circuits in the heat exchanger (10).

2. Heat exchanger (10) according to claim 1, where the fluids pass the heat exchanger (10) before being circuited to the electrolyzing device (2).

3. Heat exchanger (10) according to claim 1 or 2, wherein the heat exchanger (10) is formed of a stack (12) of patterned heat transferring plates (11) positioned on top of each other, where the heat transfer plates (11) are shaped with patterns such that when two plates (11) are stacked on top of each other, the patterns define a flow circuit (13, 14, 15) between the two plates.

4. Heat exchanger (10) according to claim 3, where the heat transfer plates (11) are connected in pairs such that the two plates (10) in a pair is sealed along their rims and contacts each other by the intersecting patterns of the heat transfer plates (11) forming fluidly connected inner cavities for providing at least one flow circuit (13, 14).

5. Heat exchanger (10) according to claim 4, where first (17) or second (18) pair of openings are formed in the heat transfer plates (11) and where two adjacent plates (11) of two connected pairs may be connected and sealed together by e.g. a welding or brazing along the edge of the plate first or second set of openings (17, 18).

6. Heat exchanger (10) according to any of the previous claims, where transfer plates (11) is formed with a first (17) and second (18) sets of openings and defines a first (13) and second (14) flow circuit for respective a first and second fluid.

7. Heat exchanger (10) according to claim 6, where a separation (16) is formed to seal the first flow circuit (13) from the second flow circuit (14).

8. Heat exchanger (10) according to claim 4 and 7, where the separation (16) is formed in the inner cavity of a pair of connected heat transfer plates (11) defining the respective first flow circuit (17) and second fluid flow circuit (18).

9. Heat exchanger (10) according to claim 8, where the separation (16) is formed by a projection in the plates (11) in the inwards direction relative to the inner cavity, such that when the meet inside the cavity the forms a blockage between the first (13) and second (14) flow circuits.

10. Heat exchanger (10) according to one of claims 3-5 and one of claims 6-9, wherein the stack (12) is positioned in a shell (20), and where a third flow circuit (15) is formed in the inner cavity of the shell (20).

11. Heat exchanger (10) according to claim 10, where the third flow circuit (15) is formed at the outside surfaces of the plates (11) of the connected pairs of plates.

12. Heat exchanger (10) according to claim 10 or 11, where the third fluid circuit (15) is adapted for a heat transferring fluid to transfer heat with both the first and second fluids in the respective first (13) and second (14) flow circuits.

13. Heat exchanger (10) according to any of the previous claims, comprising a flange (30) defining flange holes (31) adapted for rods (33) to fix the heat exchanger (10) to the electrolyzing device (2).

14. Heat exchanger (10) according to any of the previous claims, wherein a cover plate (40) is positioned as a separation between the stack (12) and the electrolysing device (2), where the cover plate (40) is formed with cover plate openings (41) adapted to connect the first (13) and second (14) flow circuits to the plant (1).

15. Electrolyzer (1) comprising an electrolysing device (2) equipped with the heat exchanger (10) according to any of the previous claims.

16. Electrolyzer (1) comprising an electrolysing device (2) equipped with an heat exchanger (10, 10a) according to any of the previous claims at two opposite ends.
